# EUROPÄISCHE PATENTANMELDUNG

(11) **EP 4 657 136 A2**
(43) Veröffentlichungstag der Anmeldung: **03.12.2025**
(21) Anmeldenummer: 25209822.3
(22) Anmeldetag: 15.03.2021
(51) Int. Cl.: G02B 21/36

(54) **VERFAHREN UND VORRICHTUNG ZUR UNTERSUCHUNG VON MIKROSKOPPROBEN UNTER VERWENDUNG OPTISCHER MARKER**

(30) Priorität: 13.03.2020 DE 102020203290
(62) Teilanmeldung aus: 21712983.2
(71) Anmelder: Leica Microsystems CMS GmbH, 35578 Wetzlar (DE)
(72) Erfinder: SCHLAUDRAFF, Falk, 35510 Butzbach (DE)
(74) Vertreter: Maiwald GmbH

(57) **Zusammenfassung**

Die Erfindung betrifft ein Mikroskopierverfahren sowie eine Vorrichtung (100) zur Untersuchung von Mikroskopproben (102). Eine Mikroskopprobe (102) weist ein zu mikroskopierendes Objekt (104) und einen das Objekt (104) haltenden Probenträger (106) auf. Um die Untersuchung, insbesondere die Identifikation von Mikroskopproben (102) zu vereinfachen, ist die Vorrichtung (100) ausgestaltet, eine digitale Identifikationskennung (108) der Mikroskopprobe (102) durch Fingerprinting (110) der Mikroskopprobe (102) unter Verwendung wenigstens eines optischen Markers (112) in wenigstens einem digitalen Abbild (114) zumindest eines Teils des Objekts (104) zu berechnen. Mithilfe der digitalen Identifikationskennung (108) kann die Mikroskopprobe (102) wiedererkannt werden.

## Beschreibung

Die Erfindung betrifft eine Vorrichtung und ein insbesondere computerimplementiertes Verfahren zur Untersuchung von Mikroskopproben.

Die Erfindung setzt sich zum Ziel, die Untersuchung von Mikroskopproben zu vereinfachen, insbesondere, wenn die Mikroskopproben in einer Reihe von zeitlich aufeinanderfolgenden Abständen untersucht werden, beispielsweise durch verschiedene Mikroskope.

Dieses Ziel wird zum einen erreicht durch eine Vorrichtung zur Untersuchung von Mikroskopproben, wobei die Mikroskopproben ein zu mikroskopierendes Objekt und einen das Objekt haltenden Probenträger aufweisen und wobei die Vorrichtung ausgestaltet ist, eine digitale Identifikationskennung der Mikroskopprobe durch Fingerprinting der Mikroskopprobe unter Verwendung wenigstens eines optischen Markers in wenigstens einem digitalen Abbild zumindest eines Teils des Objekts zu berechnen.

Die Erfindung betrifft ferner ein Verfahren, insbesondere Mikroskopierverfahren, für Mikroskopproben, wobei die Mikroskopproben ein zu mikroskopierendes Objekt und einen das Objekt haltenden Probenträger aufweisen, wobei für wenigstens eine der Mikroskopproben durch Fingerprinting, also durch Bildverarbeitung, der Mikroskopprobe unter Verwendung optischer Marker in wenigstens einem Digitalbild zumindest eines Teils des Objekts eine digitale Identifikationskennung berechnet wird.

Durch das Fingerprinting ist es möglich, ohne Verwendung zusätzlicher Mittel, wie beispielsweise Barcodes, die Mikroskopprobe bzw. das Objekt zu identifizieren. Dadurch, dass das Fingerprinting im digitalen Abbild eines vom Objekt eingenommenen Bereichs darstellt, kann das Fingerprinting während der Untersuchung der Mikroskopprobe durchgeführt werden, ohne dass vorher andere Bereiche des Probenträgers außerhalb des Objekts oder des vom Objekt eingenommenen Bereichs, in denen beispielsweise eine Identifikation aufgedruckt wird, untersucht werden müssen. Außerdem ist es bei dieser Lösung nicht mehr notwendig, die Proben beispielsweise durch einen separaten Barcode - Scanner zu scannen, um sie zu identifizieren. Die Identifizierung findet unmittelbar im Abbild des Objekts selbst statt.

Mittels Fingerprinting wird die digitale Identifikationskennung als Fingerprint in Form eines Hashwertes erzeugt. Der Fingerprint ist das Ergebnis einer im Allgemeinen nicht injektiven Abbildung, durch eine Streuwert- oder Hashfunktion, einer großen Eingabemenge auf eine kleinere Zielmenge, nämlich die Hashwerte (vgl. Wikipedia zu Fingerprint (Hashfunktion)). Durch das Fingerprinting wird eine wenigstens nahezu eindeutige Identifikationskennung des Objekts bzw. seines Abbildes erzeugt.

Durch diese Vorteile eignen sich die erfindungsgemäße Vorrichtung und das erfindungsgemäße Verfahren insbesondere für gekühlte Mikroskopproben, die im gekühlten Zustand untersucht werden, da die Identifikation der Mikroskopproben schnell und ohne zusätzliche Geräte möglich ist.

Das Objekt ist insbesondere ein biologisches Sample oder eine biologische Probe, beispielsweise eine Zelle, eine Zellkultur und/oder ein Schnitt durch biologisches Gewebe. Das Objekt kann anorganisches Material enthalten oder aus diesem bestehen. Das Objekt kann einen Bereich des Probenträgers durchgängig bedecken oder einzelne, voneinander beabstandete Bereiche des Probenträgers abdecken. Unter das Halten des Objekts fällt selbstverständlich auch ein Abstützen, Aufnehmen oder Enthalten des Objekts.

Im Folgenden sind weitere vorteilhafte Ausgestaltungen der Vorrichtung und des Verfahrens beispielhaft erläutert. Die einzelnen Ausgestaltungen sind dabei unabhängig voneinander kombinierbar und unabhängig voneinander austauschbar. Insbesondere ist es auch möglich, dass die Vorrichtung ausgestaltet ist, ein nachstehend als Verfahrensschritt angegebenes Merkmal auszuführen. Umgekehrt kann eine funktionelle Eignung der Vorrichtung auch einen Verfahrensschritt darstellen.

So kann ein digitales Abbild eine Übersichtsaufnahme des Objekts sein bzw. repräsentieren. Beispielsweise kann das digitale Abbild von einem Slidescanner erzeugt werden oder erzeugt worden sein. Ein solcher Slidescanner ist ausgestaltet, eine Mehrzahl von biologischen Objekten auf den Probeträgern nacheinander bevorzugt automatisiert zu digitalisieren. Der Probenträger oder zumindest der Bereich, auf dem sich das Objekt befindet, kann mittels einer geringen Vergrößerung aufgenommen werden. Insbesondere kann ein digitales Abbild in Durchlicht erzeugt werden.

Ein digitales Abbild kann auch einen Ausschnitt des Objekts darstellen. Ferner kann ein digitales Abbild eine Kachel sein, wobei mehrere Kacheln sich zusammen zu einem digitalen Abbild eines größeren Bereichs des Objekts ergänzen.

Der Probenträger ist bevorzugt aus Glas oder einem anderen licht- und elektronenstrahldurchlässigen Material, so dass die Abbilder unter Verwendung unterschiedlichster elektromagnetischer Strahlung erzeugt werden können. Der Probenträger kann auch aus Metall gefertigt sein. Gemäß einer weiteren Ausgestaltung kann der Probenträger eine Beschichtung aufweisen. Beispielsweise kann der Probenträger eine Gold- und/oder Kohlenstoffbeschichtung aufweisen.

Bei der Berechnung der digitalen Identifikationskennung mittels Fingerprinting können auch Metadaten, die nicht im Abbild enthalten sind, berücksichtigt werden. So können beispielsweise Tischkoordinaten und/oder Abstandinformationen, eine Vergrößerung, eine Auflösung und/oder eine Brennweite, die dem Abbild bzw. seiner Erzeugung zugrunde liegen, in der digitalen Identifikationskennung enthalten oder mit dieser verknüpft sein. Metadaten, die in der digitalen Identifikationskennung enthalten sind, spiegeln den Hashwert bzw. Fingerprint wieder, der ohne diese oder mit anderen Daten einen anderen Wert aufweist.

Gemäß einer weiteren vorteilhaften Ausgestaltung umfasst das Fingerprinting insbesondere eine rekursive Hash-Funktion.

Die Vorrichtung zur Untersuchung von Mikroskopproben umfasst Hardware und/oder Software, beispielsweise in Form eines Bildprozessors. Die Vorrichtung kann einen Speicher aufweisen, in dem beispielsweise eine oder mehrere Identifikationskennungen und/oder eines oder mehrere Abbilder abgelegt sind. Eine digitale Identifikationskennung und/oder ein Abbild kann insbesondere in einem nichtflüchtigen Speicher gespeichert sein oder gespeichert werden. Das nichtflüchtige Speicher kann Teil der Vorrichtung sein. Im Speicher können auch Metadaten abgelegt sein, die mit einer digitalen Identifikationskennung verknüpft sind.

Die Vorrichtung kann insbesondere ausgestaltet sein, den Probenträger oder das Objekt durch Vergleich der berechneten digitalen Identifikationskennung mit einer gespeicherten und/oder (zuvor) berechneten Identifikationskennung zu identifizieren oder eine digitale Identifikationskennung für ein gespeichertes Abbild durch Fingerprinting zu berechnen und beide Identifikationskennungen zu vergleichen. Dabei kann die gespeicherte Identifikationskennung ein Abbild repräsentieren bzw. auf Basis wenigstens eines Abbildes berechnet worden sein, das eine andere Auflösung, Lage, Orientierung und/oder Vergrößerung aufweist als das wenigstens eine Abbild zur Ermittlung der (zuvor) berechneten Identifikationskennung.

Gemäß einer weiteren vorteilhaften Ausgestaltung kann der Probenträger mit einem vorbestimmten, insbesondere regelmäßigen Muster versehen sein. Der wenigstens eine optische Marker kann wenigstens eine im Abbild repräsentierte Unregelmäßigkeit des Musters, insbesondere eine im Bereich des Objekts liegende Unregelmäßigkeit, umfassen. Die Unregelmäßigkeit kann auch künstlich und absichtlich erzeugt sein, beispielsweise durch ein Lasermikrodissektionssystem, wie dies in der DE 10 2014 202 860 A1 beschrieben ist.

Das vorbestimmte Muster ist bevorzugt wenigstens im Bereich des Objekts auf dem Probenträger vorhanden. Das Muster kann beispielsweise ein Gitter sein. Ein solches Gitter kann aus einem metallischen Werkstoff gefertigt, beispielsweise auf den Probenträger aufgetragen sein.

Der wenigstens eine optische Marker kann wenigstens eine absichtlich eingebrachte oder zufällig entstandene Unregelmäßigkeit und/oder Beschädigung des vorbestimmten Musters umfassen. So können beispielsweise in regelmäßigen oder unregelmäßigen Abständen eines Gitters unregelmäßige Markierungen, wie Buchstaben oder Ziffern, im Zuge der Fertigung des Musters eingebracht sein. Derartige Markierungen können auch zur Bestimmung der Auflösung, Lage, Orientierung und/oder Vergrößerung des digitalen Abbildes, in dem dieser optische Marker wiedergegeben ist, verwendet werden. Beschädigungen des Musters bzw. des Gitters und/oder der zusätzlich zum Muster bzw. Gitter vorgesehenen unregelmäßigen Markierungen sind meist stochastischer Natur hinsichtlich Lage und/oder Form und können bevorzugt zum Fingerprinting verwendet werden.

Ein optischer Marker kann auch aus einer insbesondere partiellen Überdeckung des Musters durch das Objekt ergeben.

Die Unregelmäßigkeit kann auch Teil des Musters sein. So kann beispielsweise das Muster einen quasi-zufälligen Code repräsentieren, der die Lage kodiert. Beispielsweise können die Gitterlinien durch eine quasi-zufällige Abfolge von langen und kurzen Strichen oder eine quasi-zufällige Abfolge von Lücken und Löchern gebildet sein. Ein quasizufälliger (quasirandom) Code ist eine systematisch konstruierte, gleichförmige verteilte Code- oder Zahlenfolge.

In einer weiteren vorteilhaften Ausgestaltung kann vorgesehen sein, dass die Mikroskopprobe, insbesondere das Objekt, mit zufällig verteilten Markerkörpern versehen ist und/oder wird und dass der wenigstens eine optische Marker wenigstens einen Markerkörper, bevorzugt eine Mehrzahl von Markerkörpern im Abbild umfasst. Ein Markerkörper ist ein separater Körper, mit dem die Probe zur Erzeugung optischer Marker versehen wird. Ein Durchmesser eines Markerkörpers kann zwischen 1 nm und 1 mm liegen, je nach der Vergrößerung des Objekts im Abbild. Ihre Größe und Verteilungsdichte ist bevorzugt so bemessen, dass sich in einem Abbild eine Mehrzahl von Markerkörpern befindet, ohne dass zu untersuchende Strukturen überdeckt werden.

Derartige zufällig bzw. stochastisch verteilte Markerkörper können beispielsweise Passermarker oder Fiducials sein. Insbesondere können die Markerkörper perlenförmige Körper sein. Die Markerkörper können aus Metall oder einem nicht-Metall aufgebaut sein, um reflektierend und/oder fluoreszierend sein. Die Markerkörper können in einem separaten Verfahrensschritt per Hand oder automatisch auf den Probenträger oder das Objekt aufgebracht werden.

Der wenigstens eine optische Marker kann eine Größe im Bereich von außerhalb eines Mikrometers bzw. in mehreren Mikrometern aufweisen. Unterschiedliche Marker können unterschiedliche Größen aufweisen.

Die Markerkörper und/oder die wenigstens eine Unregelmäßigkeit können stochastisch über das Abbild und das Objekt verteilt sein. In einer weiteren Ausgestaltung können die Markerkörper und/oder die wenigstens eine Unregelmäßigkeit des Musters jedoch eine quasi zufällige Verteilung bilden, die für jeden Bildausschnitt einen eindeutigen Code erzeugt. Durch diesen Quasi-Zufalls-Code lässt sich das Abbild durch Fingerprinting einfach identifizieren. Zudem erlaubt es ein solcher Quasi-Zufalls-Code, die Lage und/oder die Orientierung des digitalen Abbildes innerhalb des gesamten vom Objekt eingenommenen Bereichs der Mikroskopprobe eindeutig zu lokalisieren.

Die Unregelmäßigkeit kann absichtlich oder unabsichtlich erzeugt sein.

Der wenigstens eine optische Marker kann gemäß einer weiteren Ausgestaltung eine Unregelmäßigkeit einer Beschichtung des Probenträgers im Abbild umfassen bzw. repräsentieren. Eine solche Beschichtung kann beispielsweise eine Nährschicht, ein Carbon-Layer, eine durch einen Laser, beispielsweise mittels Lasermikrodissektion, schneidbare Membran beispielsweise aus oder enthaltend PEN und/oder PET, und/oder eine Carbon-Membran umfassen. Eine Unregelmäßigkeit, die als wenigstens ein optischer Marker dient, kann insbesondere eine Beschädigung der Beschichtung und/oder eine Kontamination des Objekts und/oder eines Bereichs des Objekts sein. Ein Beispiel für eine Kontamination ist beispielsweise ein Eiskristall oder eine vereiste Stelle bei einem Kryosample.

Der wenigstens eine optische Marker kann ferner eine im Abbild repräsentierte Struktur des Objekts sein. Eine solche Struktur kann beispielsweise ein Zellbestandteil, eine Anordnung mehrerer Zellbestandteile, eine Verteilung mehrerer Zellen, eine einzelne Zelle, eine Gewebestruktur und/oder eine beliebige Kombination dieser Strukturen sein.

Ein optischer Marker kann auch eine Vereisungsstruktur eines gefrorenen Objekts, eine Struktur aus Eis, beispielsweise ein Eiskristall oder eine Mehrzahl von Eiskristallen, und/oder ein bearbeiteter Bereich des Objekts sein. Ein derartiger bearbeiteter Bereich kann eine Lamelle, ein Lift-out oder ein ausgeschnittener oder abgetragener Bereich des Objekts sein.

In der digitalen Identifikationskennung kann ein Zeitpunkt der Erstellung des wenigstens eines Abbildes enthalten bzw. kodiert sein. Der Zeitpunkt der Erstellung des wenigstens einen Abbildes lässt insbesondere bei der Untersuchung von Mikroskopproben in festgelegt aufeinanderfolgenden Schritten mit jeweils in einem engen Toleranzrahmen vorgegebenen Untersuchungszeitspannen ebenfalls eine Identifikation der Probe zu. So kann eine Probe in Abhängigkeit von einer Zeitdifferenz zwischen der Erstellung zweier Abbilder insbesondere durch unterschiedliche Einrichtungen identifiziert werden.

Die unterschiedlichen Abbilder können mit unterschiedlichen Modalitäten, beispielsweise sichtbarem und/oder nicht sichtbarem Licht, Fluoreszenzlicht und/oder Elektronenstrahl aufgenommen werden. Die unterschiedlichen Abbilder können alternativ oder zusätzlich mittels unterschiedlicher Kontrast- und/oder Aufnahmeverfahren, beispielsweise Hellfeld-, Dunkelfeldmikroskopie, Fluoreszenzmikroskopie, Konfokalmikroskopie einschließlich *spinning disc,* Lichtblattmikroskopie, Mehrphotonenmikroskopie, hochauflösende Mikroskopie wie STED oder Lokalisationsmikroskopie, Elektronenmikroskopie und/oder Rasterkraftmikroskopie aufgenommen sein.

Die Vorrichtung zum Untersuchen der Mikroskopprobe kann beispielsweise ausgebildet sein, wenigstens ein Abbild durch ein Lichtmikroskop und/oder wenigstens ein Abbild durch ein Elektronenmikroskop zu erstellen. Das Mikroskopierverfahren kann den Verfahrensschritt des Erstellens wenigstens eines Abbildes durch ein Lichtmikroskop und/oder Erstellens wenigstens einen Abbildes durch ein Elektronenmikroskop und/oder Rasterkraftmikroskop umfassen.

Die Vorrichtung zur Untersuchung der Mikroskopprobe gemäß einer der oben beschriebenen Ausgestaltungen kann wenigstens eine Einrichtung aus der folgenden Liste aufweisen: wenigstens ein Lichtmikroskop; wenigstens ein Elektronenmikroskop; wenigstens ein Rasterkraftmikroskop; wenigstens eine Vorrichtung zum Bearbeiten des Objekts; wenigstens eine Vorrichtung zum Einfrieren der Mikroskopprobe; wenigstens einen Kryobehälter für wenigstens eine Mikroskopprobe; wenigstens ein Mikrotom; wenigstens einen Mikromanipulator; wenigstens eine Lasermikrodissektionseinheit; wenigstens eine optische Pinzette (*optical tweezers*); wenigstens einen Hochdruckgefrierer (*high pressure freezer*); wenigstens einen Grid Plunger; wenigstens einen *dry shipper,* beispielsweise einen Trockenversandbehälter und/oder einen Stickstoff-Transportbehälter.

Das Lichtmikroskop kann als ein Slidescanner, ein hochauflösendes Mikroskop wie ein STED oder ein Lokalisationsmikroskop, ein Stereo-, Phasendifferenz-, Durchlicht-, Auflicht-, Hellfeld-, Dunkelfeld-, Lichtblatt-, Lasermikrodissektions- und/oder Konfokal-Mikroskop einschließlich baulicher Kombinationen derartiger Mikroskope ausgestaltet sein. Die Vorrichtung kann auch mehrere derartige Lichtmikroskope, auch unterschiedlicher Art, aufweisen, mit denen die Mikroskopprobe nacheinander untersucht wird.

Das Lichtmikroskop ist insbesondere ausgestaltet zum Untersuchen eingefrorener Mikroskopproben.

Das Elektronenmikroskop kann ein scannendes und/oder transmissives Elektronenmikroskop sein. Auch das Elektronenmikroskop kann bevorzugt zum Untersuchen eingefrorener Mikroskopproben ausgestaltet sein.

Bei der Vorrichtung zum Bearbeiten des Objekts kann es sich beispielsweise um robotergesteuerte Pinzette, einen Picker, eine Pipette, einen Ionenstrahl-Ablator und/oder eine Dissektionsvorrichtung, beispielsweise eine Lasermikrodissektionsvorrichtung handeln.

Die Vorrichtung zum Einfrieren der Probe kann eine separate Vorrichtung sein oder in ein Mikroskop integriert sein.

Der Kryobehälter kann eine integrierte Transfereinheit zur Überführung der Mikroskopprobe aus dem Kryobehälter in das Licht- und/oder Elektronenmikroskop und/oder die Vorrichtung zum Bearbeiten des Objekts aufweisen. Die Vorrichtung zum Bearbeiten des Objekts kann in ein Licht- und/oder Elektronenmikroskop integriert sein.

Die Vorrichtung zur Untersuchung von Mikroskopproben kann ausgestaltet sein, eine Mehrzahl unterschiedlicher Abbilder der Mikroskopprobe zu erstellen. Das Mikroskopierverfahren kann den Verfahrensschritt des Erstellens einer Mehrzahl unterschiedlicher Abbilder der Mikroskopprobe umfassen. Eine Identifikationskennung kann für jedes der unterschiedlichen Abbilder separat, für eine Untermenge der unterschiedlichen Abbilder und/oder für die Gesamtheit der Abbilder gemeinsam jeweils durch Fingerprinting erstellt werden. Die unterschiedlichen Identifikationskennungen der unterschiedlichen Abbilder können gemeinsam zu einer übergeordneten Identifikationskennung des passenden Objekts zusammengefügt sein.

Die Mehrzahl der unterschiedlichen Abbilder zur Berechnung einer Identifikationskennung wird bevorzugt in einem Schritt, insbesondere durch eine einzige Einrichtung, wie beispielsweise durch ein einzelnes Lichtmikroskop oder ein einzelnes Elektronenmikroskop, erzeugt. Alternativ oder zusätzlich kann die Mehrzahl der Abbilder auch durch verschiedene Einrichtungen, beispielsweise durch eine oder mehrere Lichtmikroskope und/oder durch ein oder mehrere Elektronenmikroskope erzeugt werden. So können beispielsweise jeweils ein oder mehrere Abbilder nacheinander durch verschiedene Licht-, Rasterkraft- und/oder Elektronenmikroskope erzeugt werden. Dabei kann eine vorhandene Identifikationskennung, die anhand eines oder mehrerer Abbilder eines Mikroskops berechnet wurde, durch eine Identifikationskennung ersetzt oder ergänzt werden, die anhand einer oder mehrerer Abbilder eines anderen Mikroskops berechnet wurde.

Die einzelnen Abbilder der Mehrzahl unterschiedlicher Abbilder können unterschiedliche Farbräume und/oder -kanäle, eine unterschiedliche Farbe, Vergrößerung und/oder Auflösung aufweisen. Jedes der Abbilder kann einen unterschiedlichen Farbkanal und/oder eine Kombination unterschiedlicher Farbkanäle aufweisen. Insbesondere kann wenigstens ein Abbild in zumindest einem Ausschnitt eines Fluoreszenzspektrums eines Fluorophores repräsentieren bzw. erzeugt werden. Das Fluorophor ist bevorzugt Teil des Objekts. Werden mehrere Fluorophore gleichzeitig verwendet, können mehrere Abbilder unterschiedliche Fluoreszenzspektren unterschiedlicher Fluorophore repräsentieren.

Gemäß einer weiteren Ausgestaltung kann ein Abbild der Probe in eine Mehrzahl von Kacheln zerlegt werden. Eine digitale Identifikationskennung kann für jede einzelne Kachel separat und/oder beliebige Kombinationen von Kacheln jeweils zusammen berechnet werden. Die einzelnen Identifikationskennungen der Kacheln können zu einer gemeinsamen Identifikationskennung, beispielsweise in Form einer Blockchain, kombiniert werden.

Unterschiedliche Abbilder, auch in verschiedenen Modalitäten, können unter Verwendung der optischen Marker automatisch registriert werden. So kann beispielsweise das Abbild vom Elektronenmikroskop in Abhängigkeit vom Abbild vom Lichtmikroskop automatisch zumindest bereichsweise und richtungsabhängig vergrößert gestreckt, rotiert und/oder verzerrt werden, so dass beide Abbilder deckungsgleich sind. Ein Beispiel für einen Algorithmus für eine derartige Registrierung ist in Gee, J.C.; Reivich, M.; Bajcsy, R.: *"Elastically deforming a three-dimensional atlas to match an atomical brain images",* 1993, IRCS Technical Reports Series, 192, beschrieben.

Beispiele für die Identifizierung von Strukturen in einem Bild sind beispielsweise in Rouchdy, Y.; Cohn, L.: *"A geodesic voting method for the segmentation of tubular tree and center lines",* 2011, DOI:10.1109/ISBI.2011.5872566, 979 bis 983 und in Suri, J*.: "Angiography and plaque imaging: Advanced segmentation techniques",* 2003, CRC Press angegeben.

Das Mikroskopierverfahren in einer der obigen Ausgestaltung kann zudem die folgenden Verfahrensschritte, bevorzugt, aber nicht notwendigerweise, in der folgenden Reihenfolge, aufweisen: Bearbeiten des Objekts, Erstellen wenigstens eines Abbildes des bearbeiteten Objekts, Erstellen einer neuen und/oder Ergänzen einer vorhandenen digitalen Identifikationskennung der Mikroskopprobe durch Fingerprinting des wenigstens einen Abbildes des bearbeiteten Objekts unter Verwendung optischer Marker im wenigstens einen Abbild, und/oder Ersetzen einer vorhandenen digitalen Identifikationskennung der Mikroskopprobe durch Fingerprinting des wenigstens einen Abbildes des bearbeiteten Objekts unter Verwendung optischer Marker. Auf diese Weise ist es möglich, bei Veränderungen des Objekts eine neue Identifikationskennung zu berechnen und eine vorhandene Identifikationskennung zu ergänzen und/oder zu ersetzen. So kann beispielsweise durch die Bearbeitung ein neuer optischer Marker erzeugt werden, der dazu dienen kann, die Identifikationskennung weiter zu individualisieren. In der Identifikationskennung eines Objekts kann eine Mehrzahl von Identifikationskennungen unterschiedlicher Abbilder, beispielsweise in Form einer Blockchain, enthalten sein.

Von besonderem Vorteil ist es, wenn der wenigstens eine optische Marker, der zur Berechnung einer digitalen Identifikationskennung dient, gleichzeitig als Positionsreferenz verwendet wird. Der Positionsreferenz kann beispielsweise eine eindeutige Lagekennung auf dem Probenträger, zum Beispiel in Form von Koordinaten, zugeordnet sein. Auf diese Weise lässt sich, insbesondere in Abhängigkeit von der Vergrößerung und/oder Auflösung, die Lage von Strukturen relativ zu dem wenigstens einem als Positionsreferenz dienenden optischen Marker, und damit gegebenenfalls eine Absolutposition auf dem Probenträger, einfach und zuverlässig bestimmen.

Die Vorrichtung kann insbesondere einen Prozessor, beispielsweise einen Prozessor zur Bilddatenverarbeitung, aufweisen, der beispielsweise in Form einer CPU, GPU, eines Vektorprozessors (VPU), eines ASIC, eines FPGA und/oder einer beliebigen Kombination derartiger Komponenten einschließlich Speicher aufgebaut sein kann. Die oben beschriebenen Verfahrensschritte können als Hardware- und/oder Softwarekomponenten ausgestaltet sein.

Die Erfindung betrifft entsprechend auch ein Computerprogrammprodukt, das Befehle umfasst, die bei Ausführung des Programms durch einen Computer diesen veranlassen, das Verfahren in einer der oben beschriebenen Ausgestaltungen durchzuführen.

Ferner betrifft die Erfindung einen computerlesbaren Datenträger, auf dem das Computerprogrammprodukt gespeichert ist.

Die Erfindung betrifft des Weiteren eine digitale Identifikationskennung eines Abbildes einer Mikroskopprobe, wobei die digitale Identifikationskennung durch eine Vorrichtung und/oder ein Verfahren in einer der obigen Ausgestaltungen berechnet ist.

Es ist schließlich auch möglich, maschinelles Lernen, insbesondere aber ein neuronales Netzwerk zusammen mit wenigstens einem Mikroskop zur Berechnung und gegebenenfalls auch Identifikation einer digitalen Identifikationskennung zu verwenden. Ein neuronales Netzwerk ist erfindungsgemäß, wenn es durch die Identifikationskennungen, die durch das Verfahren und/oder die Vorrichtung in einer der obigen Ausgestaltungen berechnet sind, und/oder durch unterschiedliche Abbilder trainiert ist.

Ausführungsbeispiele können auf dem Verwenden eines Maschinenlern-Modells oder Maschinenlern-Algorithmus basieren. Maschinelles Lernen kann sich auf Algorithmen und statistische Modelle beziehen, die Computersysteme verwenden können, um eine bestimmte Aufgabe ohne Verwendung expliziter Anweisungen auszuführen, anstatt sich auf Modelle und Interferenz zu verlassen. Beim maschinellen Lernen kann beispielsweise anstatt einer auf Regeln basierenden Transformation von Daten, eine Transformation von Daten verwendet werden, die aus einer Analyse von Verlaufs- und/oder Trainings-Daten hergeleitet werden kann. Beispielsweise kann der Inhalt von Bildern unter Verwendung eines Maschinenlern-Modells oder unter Verwendung eines Maschinenlern-Algorithmus analysiert werden. Damit das Maschinenlern-Modell den Inhalt eines Bildes analysieren kann, kann das Maschinenlern-Modell unter Verwendung von Trainingsbildern als Eingabe und Trainingsinhaltsinformation als Ausgabe trainiert werden. Durch Trainieren des Maschinenlern-Modells mit einer großen Anzahl von Trainingsbildern und/oder Trainingssequenzen (z. B. Wörtern oder Sätzen) und zugeordneter Trainingsinhaltsinformation (z. B. Kennzeichnungen oder Anmerkungen) "lernt" das Maschinenlern-Modell, den Inhalt der Bilder zu erkennen, sodass der Inhalt von Bildern, die in den Trainingsdaten nicht umfasst sind, unter Verwendung des Maschinenlern-Modells erkannt werden kann. Das gleiche Prinzip kann für andere Arten von Sensordaten ebenfalls verwendet werden: Durch Trainieren eines Maschinenlern-Modells unter Verwendung von Trainingssensordaten und einer erwünschten Ausgabe "lernt" das Maschinenlern-Modell eine Umwandlung zwischen den Sensordaten und der Ausgabe, was verwendet werden kann, um eine Ausgabe basierend auf an das Maschinenlern-Modell bereitgestellten Nicht-Trainings-Sensordaten bereitzustellen. Die bereitgestellten Daten (z.B. Sensordaten, Metadaten und/oder Bilddaten) können vorverarbeitet werden, um einen Merkmalsvektor zu erhalten, welcher als Eingang für das Maschinenlern-Modell verwendet wird.

Maschinenlern-Modelle können unter Verwendung von Trainingseingabedaten trainiert werden. Die oben angeführten Beispiele verwenden ein Trainingsverfahren, das "Supervised Learning" genannt wird. Beim Supervised Learning wird das Maschinenlern-Modell unter Verwendung einer Mehrzahl von Trainingsabtastwerten trainiert, wobei jeder Abtastwert eine Mehrzahl von Eingabedatenwerten und eine Mehrzahl von erwünschten Ausgabewerten, d. h. jedem Trainingsabtastwert ist ein erwünschter Ausgabewert zugeordnet, umfassen kann. Durch Angeben sowohl von Trainingsabtastwerten als auch erwünschten Ausgabewerten "lernt" das Maschinenlern-Modell, welcher Ausgabewert basierend auf einem Eingabeabtastwert, der ähnlich zu den während des Trainings bereitgestellten Abtastwerten ist, bereitzustellen ist. Neben dem Supervised Learning kann auch Semi-Supervised Learning verwendet werden. Beim Semi-Supervised Learning fehlt einigen der Trainingsabtastwerte ein erwünschter Ausgabewert. Supervised Learning kann auf einem Supervised Learning-Algorithmus basieren (z. B. einem Klassifizierungsalgorithmus, einem Regressionsalgorithmus oder einem Ähnlichkeitslernen-Algorithmus). Klassifizierungsalgorithmen können verwendet werden, wenn die Ausgaben auf eine begrenzte Menge von Werten (kategorische Variablen) beschränkt sind, d. h. die Eingabe ist als einer aus dem begrenzten Satz von Werten klassifiziert. Regressionsalgorithmen können verwendet werden, wenn die Ausgaben irgendeinen Zahlenwert (innerhalb eines Bereichs) ausweisen. Ähnlichkeitslernen-Algorithmen können sowohl Klassifizierungs- als auch Regressionsalgorithmen ähnlich sein, basieren aber auf dem Lernen aus Beispielen unter Verwendung einer Ähnlichkeitsfunktion, die misst, wie ähnlich oder verwandt zwei Objekte sind. Neben dem Supervised Learning oder Semi-Supervised Learning kann Unsupervised Learning verwendet werden, um das Maschinenlern-Modell zu trainieren. Beim Unsupervised Learning werden möglicherweise (nur) Eingabedaten bereitgestellt und ein Unsupervised Learning-Algorithmus kann verwendet werden, um eine Struktur in den Eingabedaten zu finden (z. B. durch Gruppieren oder Clustern der Eingabedaten, Finden von Gemeinsamkeiten in den Daten). Clustern ist die Zuweisung von Eingabedaten, die eine Mehrzahl von Eingabewerten umfassen, in Teilmengen (Cluster), sodass Eingabewerte innerhalb desselben Clusters gemäß einem oder mehreren (vordefinierten) Ähnlichkeitskriterien ähnlich sind, während sie Eingabewerten, die in anderen Clustern umfasst sind, unähnlich sind.

Verstärkendes Lernen ist eine dritte Gruppe von Maschinenlern-Algorithmen. Anders ausgedrückt, verstärkendes Lernen kann verwendet werden, um das Maschinenlern-Modell zu trainieren. Beim verstärkenden Lernen werden ein oder mehrere Software-Akteure (sogenannte "Software Agents") trainiert, um Handlungen in einer Umgebung vorzunehmen. Basierend auf den vorgenommenen Handlungen wird eine Belohnung berechnet. Verstärkendes Lernen basiert auf dem Trainieren des einen oder der mehreren Software Agents, um die Handlungen auszuwählen, derart, dass die kumulative Belohnung erhöht wird, was zu Software Agents führt, die in der Aufgabe, die ihnen gegeben wird, besser werden (wie durch steigende Belohnungen nachgewiesen).

Ferner können einige Techniken auf einige der Maschinenlern-Algorithmen angewandt werden. Zum Beispiel kann Feature Learning verwendet werden. Anders ausgedrückt, das Maschinenlern-Modell kann zumindest teilweise unter Verwendung von Feature Learning trainiert werden, und/oder der Maschinenlern-Algorithmus kann eine Feature Learning-Komponente umfassen. Feature Learning-Algorithmen, die Representation-Learning-Algorithmen genannt werden, können die Information in ihrer Eingabe erhalten, sie aber derart transformieren, dass sie nützlich wird, häufig als Vorverarbeitungsstufe vor dem Ausführen der Klassifizierung oder dem Vorhersagen. Feature Learning kann beispielsweise auf einer Hauptkomponenten-Analyse oder Cluster-Analyse basieren.

Bei einigen Beispielen kann eine Anomaliedetektion (d. h. Ausreißer-Detektion) verwendet werden, die darauf abzielt, eine Identifizierung von Eingabewerten bereitzustellen, die Verdacht erregen, da sie sich erheblich von der Mehrheit von Eingabe- und Trainingsdaten unterscheiden. Anders ausgedrückt, das Maschinenlern-Modell kann zumindest teilweise unter Verwendung von Anomaliedetektion trainiert werden, und/oder der Maschinenlern-Algorithmus kann eine Anomaliedetektions-Komponente umfassen.

Bei einigen Beispielen kann der Maschinenlern-Algorithmus einen Entscheidungsbaum als Vorhersagemodell verwenden. Anders ausgedrückt, das Maschinenlern-Modell kann auf einem Entscheidungsbaum basieren. Bei einem Entscheidungsbaum können die Beobachtungen zu einem Gegenstand (z. B. einer Menge von Eingabewerten) durch die Zweige des Entscheidungsbaums dargestellt werden, und ein Ausgabewert, der dem Gegenstand entspricht, kann durch die Blätter des Entscheidungsbaums dargestellt werden. Entscheidungsbäume können sowohl diskrete Werte als auch fortlaufende Werte als Ausgabewerte unterstützen. Wenn diskrete Werte verwendet werden, kann der Entscheidungsbaum als Klassifizierungsbaum bezeichnet werden, wenn fortlaufende Werte verwendet werden, kann der Entscheidungsbaum als Regressionsbaum bezeichnet werden.

Assoziationsregeln sind eine weitere Technik, die bei Maschinenlern-Algorithmen verwendet werden kann. Anders ausgedrückt, das Maschinenlern-Modell kann auf einer oder mehreren Assoziationsregeln basieren. Assoziationsregeln werden erstellt, indem Verhältnisse zwischen Variablen bei großen Datenmengen identifiziert werden. Der Maschinenlern-Algorithmus kann eine oder mehrere Verhältnisregeln identifizieren und/oder nutzen, die das Wissen darstellen, dass aus den Daten hergeleitet ist. Die Regeln können z. B. verwendet werden, um das Wissen zu speichern, zu manipulieren oder anzuwenden.

Maschinenlern-Algorithmen basieren normalerweise auf einem Maschinenlern-Modell. Anders ausgedrückt, der Begriff "Maschinenlern-Algorithmus" kann einen Satz von Anweisungen bezeichnen, die verwendet werden können, um ein Maschinenlern-Modell zu erstellen, zu trainieren oder zu verwenden. Der Begriff "Maschinenlern-Modell" kann eine Datenstruktur und/oder einen Satz von Regeln bezeichnen, die/der das erlernte Wissen darstellt (z. B. basierend auf dem durch den Maschinenlern-Algorithmus ausgeführten Training). Bei Ausführungsbeispielen kann die Verwendung eines Maschinenlern-Algorithmus die Verwendung eines zugrundeliegenden Maschinenlern-Modells (oder einer Mehrzahl von zugrundeliegenden Maschinenlern-Modellen) implizieren. Die Verwendung eines Maschinenlern-Modells kann implizieren, dass das Maschinenlern-Modell und/oder die Datenstruktur/der Satz von Regeln, welche das Maschinenlern-Modell ist/sind, durch einen Maschinenlern-Algorithmus trainiert wird. Beispielsweise kann das Maschinenlern-Modell ein künstliches neuronales Netz (ANN; artificial neuronal network) sein. ANNs sind Systeme, die durch biologische neuronale Netze inspiriert sind, wie sie in einer Netzhaut oder einem Gehirn zu finden sind. ANNs umfassen eine Mehrzahl von zwischenverbundenen Knoten und eine Mehrzahl von Verbindungen, sogenannte Kanten (edges), zwischen den Knoten. Es gibt normalerweise drei Knotentypen, Eingabeknoten, die Eingabewerte empfangen, versteckte Knoten, die (nur) mit anderen Knoten verbunden sind, und Ausgabeknoten, die Ausgabewerte bereitstellen. Jeder Knoten kann ein künstliches Neuron darstellen. Jede Kante kann Information senden, von einem Knoten zum anderen. Die Ausgabe eines Knoten kann als eine (nichtlineare) Funktion der Eingaben definiert sein (z.B. der Summe seiner Eingaben). Die Eingaben eines Knoten können in der Funktion basierend auf einem "Gewicht" der Kante oder des Knoten, der die Eingabe bereitstellt, verwendet werden. Das Gewicht von Knoten und/oder von Kanten kann in dem Lernprozess angepasst werden. Anders ausgedrückt, das Training eines künstlichen neuronalen Netzes kann ein Anpassen der Gewichte der Knoten und/oder Kanten des künstlichen neuronalen Netzes umfassen, d. h. um eine erwünschte Ausgabe für eine bestimmte Eingabe zu erreichen.

Alternativ kann das Maschinenlern-Modell eine Support-Vector-Machine, ein Random-Forest-Modell oder ein Gradient-Boosting-Modell sein. Support Vector Machines (d. h. Stützvektornetze) sind Supervised Learning-Modelle mit zugeordneten Lernalgorithmen, die verwendet werden können, um Daten zu analysieren (z. B. in einer Klassifizierungs- oder Regressionsanalyse). SupportVector Machines können durch Bereitstellen einer Eingabe mit einer Mehrzahl von Trainingseingabewerten, die zu einer von zwei Kategorien gehören, trainiert werden. Die Support Vector Machine kann trainiert werden, um einer der beiden Kategorien einen neuen Eingabewert zuzuweisen. Alternativ kann das Maschinenlern-Modell ein bayessches Netz sein, das ein probabilistisches gerichtetes azyklisches graphisches Modell ist. Ein bayessches Netz kann einen Satz von Zufallsvariablen und ihre bedingten Abhängigkeiten unter Verwendung eines gerichteten azyklischen Graphen darstellen. Alternativ kann das Maschinenlern-Modell auf einem genetischen Algorithmus basieren, der ein Suchalgorithmus und heuristische Technik ist, die den Prozess der natürlichen Selektion imitiert.

Im Folgenden ist die Erfindung anhand eines Ausführungsbeispiels exemplarisch näher beschrieben. Nach Maßgabe der obigen Ausführungen können dabei Merkmale des Ausführungsbeispiels weggelassen werden, wenn es auf den mit diesen Merkmalen verbundenen technischen Effekt bei einer bestimmten Anwendung nicht ankommen sollte. Umgekehrt können dem Ausführungsbeispiel auch weitere Merkmale hinzugefügt werden, sollte es bei einer bestimmten Anwendung auf deren technischen Effekt ankommen.

Im Folgenden werden für Merkmale, die einander hinsichtlich Funktion und/oder räumlich-körperlicher Ausgestaltung entsprechen, dieselben Bezugszeichen verwendet.

Es zeigt:

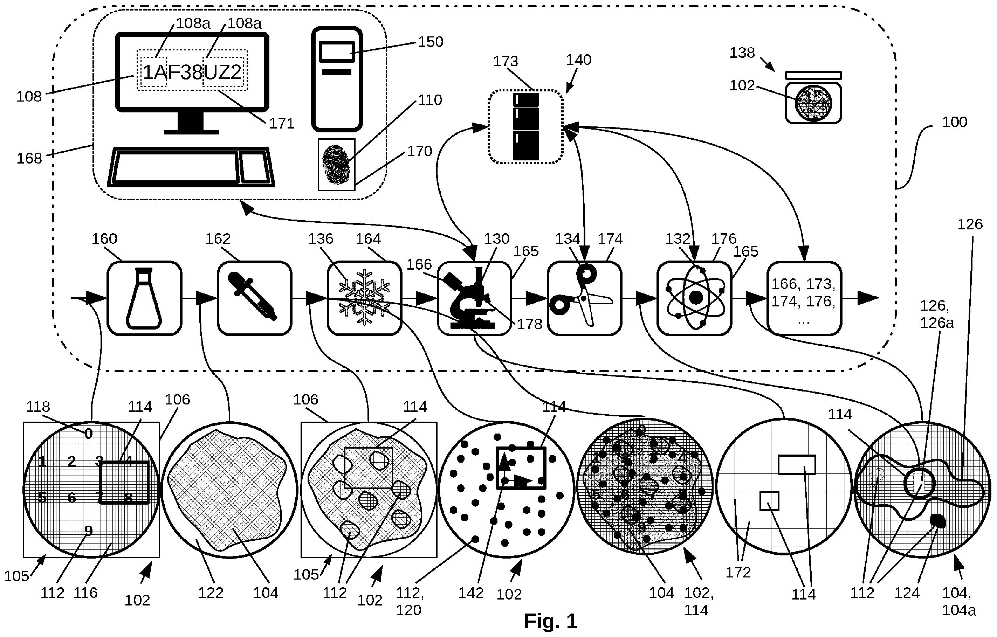

- Fig. 1: eine schematische Darstellung einer erfindungsgemäßen Vorrichtung zur Durchführung eines erfindungsgemäßen Verfahrens.

Die Vorrichtung 100 dient zur Untersuchung einer Mikroskopprobe 102. Die Vorrichtung 100 kann ein System sein, das ein oder mehrere Teilsysteme aufweist, wie weiter unten erläutert ist.

Die Mikroskopprobe 102 weist einen mit einem Objekt 104 bedeckten oder zur Aufnahme eines Objekts 104 ausgestalteten Bereich 105 auf. Der Bereich 105 ist Teil eines Probenträgers 106.

Bei dem Objekt 104 handelt es sich bevorzugt um ein biologisches Objekt, beispielsweise um einen für eine Mikroskopie vorbereiteten Teil eines Organismus, wie beispielsweise einen Gewebeschnitt, oder um einzelne Zellen. Das Objekt kann allerdings auch anorganisch sein und/oder anorganische Bestandteile aufweisen oder aus diesen bestehen.

Der Probenträger 106 ist bevorzugt aus einem optisch transparenten Material gefertigt, das weiter bevorzugt zusätzlich transparent für Elektronenstrahlen ist. Insbesondere kann der Probenträger 106 aus Glas oder Metall gefertigt sein. Der Probenträger 106 hält das Objekt 104. Das Objekt 104 liegt also auf dem Probenträger 106, ist in ihm aufgenommen, eingeschlossen und/oder in ihm enthalten.

Die Vorrichtung 100 dient zunächst dazu, anhand des Objekts 104 und/oder des zur Aufnahme des Objekts ausgestalteten Bereichs 105 eine digitale Identifikationskennung 108 zu berechnen. Die Berechnung findet mittels Fingerprinting 110 statt. Bei dem Fingerprinting 110, das in Fig. 1 lediglich schematisch dargestellt ist, handelt es sich um einen hardware- und/oder softwareimplementierten Algorithmus, der einen Datensatz beliebiger Größe in eine kürzere Bit- oder Zahlenfolge abbildet, dem sogenannten Fingerabdruck. Der Fingerabdruck identifiziert den Originaldatensatz eindeutig oder wenigstens nahezu eindeutig. Fingerprinting-Algorithmen sind frei verfügbar, beispielsweise in der American National Software Reference Library und der Hash Keeper-Datenbank.

Das Fingerprinting 110 des Objekts 104 bzw. Bereichs 105 oder von Ausschnitten dieses Bereichs 105 nutzt optische Marker 112 in einem digitalen Abbild 114 des Bereichs 105 oder eines oder mehrere Ausschnitte des Bereichs 105.

Bei dem Abbild 114 handelt es sich um eine digitale Repräsentation wenigstens eines Teils des Bereichs 105 und/oder des Objekts 104. Eine solche digitale Repräsentation sind beispielsweise Bilddaten, die ein digitales Bild bilden. Das digitale Bild kann ein Schwarzweißbild, ein Grauskalen-Bild und/oder ein Farbbild sein. Das digitale Bild kann einen oder mehrere Farbkanäle aufweisen.

Das Erstellen eines Fingerprints kann sich vereinfachen, wenn die Mikroskopprobe 102, insbesondere der Probenträger 106 mit einem regelmäßigen oder unregelmäßigen Muster 116 versehen ist. Ein solches Muster kann beispielsweise ein Gitter oder eine Gitterstruktur sein. Das Gitter kann beispielsweise durch Auftragen einer Metallschicht auf den Probenträger 106 bzw. den Bereich 105 erzeugt werden.

Der optische Marker 112 im Abbild 114 ist dann bevorzugt eine Unregelmäßigkeit 118 des Musters 116. So kann beispielsweise das Muster mit vorbestimmten Unregelmäßigkeiten 118 versehen sein, beispielsweise unregelmäßigen Markierungen, wie Buchstaben und/oder Ziffern. Die Unregelmäßigkeit 118 kann absichtlich oder unabsichtlich erzeugt sein. Eine Unregelmäßigkeit 118 kann beispielsweise eine Beschädigung des Musters 116 und/oder eine Kontamination im Bereich 105 sein. Es ist zusätzlich oder alternativ auch möglich, dass das Muster 116 eine quasi zufällige Komponente aufweist, beispielsweise einen quasi-zufälligen Code.

Ein optischer Marker 112, wie er zum Fingerprinting 110 benutzt wird, kann auch durch einen oder mehrere Markerkörper 120 erzeugt werden, die stochastisch über den Bereich 105 verteilt sind. Die Markerkörper können eingebracht, aufgestreut und/oder aufgesprüht sein. Derartige Markerkörper oder Fiducials können beispielsweise Durchmesser im Bereich weniger Mikrometer oder von Bruchteilen von Mikrometern aufweisen. Sie können insbesondere fluoreszierend sein.

Der Bereich 105 kann zumindest teilweise mit einer Beschichtung 122 versehen sein. Bei der Beschichtung 122 kann es sich beispielsweise um eine Nährschicht oder eine Karbonschicht, beispielsweise eine Karbonmembran handeln. Alternativ oder zusätzlich kann der Probenträger 106 mit Gold beschichtet sein. Als optischer Marker 112 können eine oder mehrere Unregelmäßigkeiten 118 in der Beschichtung 122 dienen, beispielsweise eine oder mehrere Beschädigungen.

Ist das Objekt 104 tiefgefroren, so kann als Unregelmäßigkeit 118 auch das Abbild einer Vereisungsstruktur 124 dienen. Eine Vereisungsstruktur 124 kann beispielsweise ein einzelner Eiskristall, eine Ansammlung mehrerer Eiskristalle oder ein vereister Bereich sein.

Schließlich kann als optischer Marker 112 auch eine Struktur 126 des Objekts 104 dienen, beispielsweise eine Gewebestruktur oder eine Zellstruktur. Die Struktur 126 kann, wie die übrigen optischen Marker 112 auch, mit einem Elektronenstrahl, im Weißlicht und/oder in Fluoreszenzlicht aufgenommen sein.

Zur Erzeugung des digitalen Abbildes 114 kann die Vorrichtung 100 ein Lichtmikroskop 130 und/oder ein Elektronenmikroskop 132 aufweisen.

Das Lichtmikroskop 130 kann ein Slidescanner, ein hochauflösendes Mikroskop wie ein STED-Mikroskop oder ein Lokalisationsmikroskop, ein Stereo-, Phasendifferenz-, Hellfeld-, Dunkelfeld-, Fluoreszenz-, Auflicht-, Durchlicht-, Lichtblatt- und/oder Konfokalmikroskop sein. Die Vorrichtung 100 kann mehrere Lichtmikroskope 130 in der gleichen oder in unterschiedlichen Ausgestaltungen aufweisen.

Das Elektronenmikroskop 132 kann ein scannendes und/oder ein transmissives Elektronenmikroskop sein. Die Vorrichtung 100 kann ein oder mehrere Elektronenmikroskope der gleichen oder unterschiedlicher Bauart aufweisen. Anstelle oder zusätzlich zum Elektronenmikroskop kann ein Rasterkraftmikroskop verwendet werden bzw. von der Vorrichtung 100 umfasst sein.

Sowohl das wenigstens eine Lichtmikroskop 130 als auch das wenigstens eine Elektronenmikroskop 132 sind bevorzugt zur Untersuchung eingefrorener Mikroskopproben, sogenannter Kryoproben, ausgestaltet. Hierzu kann das wenigstens eine Licht- oder Elektronenmikroskop 130, 132 einen Bereich zur Aufnahme des Probenträgers aufweisen, der gekühlt und/oder wärmeisoliert ist.

Die Vorrichtung 100 kann ferner wenigstens eine Vorrichtung 134 zum Bearbeiten des Objekts 104 aufweisen. Eine solche Vorrichtung 134 ist beispielsweise eine robotergesteuerte Pinzette, ein Picker, eine Pipette, ein Mikrotom, ein Mikromanipulator, eine optische Pinzette, ein Ionenstrahl-Ablator und/oder eine Dissektionsvorrichtung wie beispielsweise eine Vorrichtung zur Lasermikrodissektion, oder eine Kombination hiervon.

Für den Fall, dass Kryoproben mit der Vorrichtung 100 untersucht werden sollen, kann wenigstens eine Vorrichtung 136 zum Einfrieren der Mikroskopprobe 102 vorhanden sein. Eine solche Vorrichtung 136 kann beispielsweise ein Kühlschrank 140, ein Hochdruckgefrierer und/oder ein Grid Plunger sein. Die Vorrichtung 136 kann in ein Mikroskop 130, 132 integriert sein.

Schließlich ist es von Vorteil, wenn die Vorrichtung 100 wenigstens einen Kryobehälter 138 aufweist, der ausgestaltet ist, wenigstens eine Mikroskopprobe 102 aufzunehmen. Der Kryobehälter 138 kann dazu dienen, die Mikroskopprobe 102 zwischen verschiedenen Mikroskopen 130, 132 zu transportieren, die sich auch in getrennten Gebäuden oder unterschiedlichen Städten befinden können. Der Kryobehälter 138 kann eine integrierte Transfereinheit aufweisen, die zur Überführung einer Mikroskopprobe 102 aus dem Kryobehälter 138 in ein Mikroskop 130, 132, eine Vorrichtung 134 und/oder eine Vorrichtung 136 ausgestaltet ist. Die Überführung kann insbesondere motorisch und/oder automatisch erfolgen. Der Kryobehälter kann ausgebildet sein, die Mikroskopprobe 102 aktiv zu kühlen und/oder wärmeisoliert oder passiv gekühlt aufzunehmen. Der Kryobehälter 138 kann beispielsweise auch ein Trockenversandbehälter oder ein Stickstoff-Transportbehälter sein.

Der wenigstens eine optische Marker 112, der zur Berechnung der digitalen Identifikationskennung 108 dient, kann gleichzeitig als Positionsreferenz 142 dienen. Beispielsweise kann ein Mikroskop 130, 132 ausgestaltet sein, den Probenträger 106 in Abhängigkeit von einem als Positionsreferenz 142 dienenden optischen Marker 112 automatisch zu positionieren.

Ein oder mehrere Marker 112 können repräsentativ für eine Lage und Ausrichtung des Bereichs 105 sein. Über die Lage zweier optischer Marker oder die Größe und Orientierung eines unregelmäßig geformten optischen Markers kann beispielsweise die Auflösung, Orientierung, Vergrößerung und/oder Lage eines Abbildes 114 bestimmt werden. Beispielsweise kann jedem optischen Marker 112 eine absolute Position auf dem Probenträger 106 oder innerhalb des Bereichs 105 zugeordnet sein. Eine Orientierung und Vergrößerung eines in einem Abbild 114 repräsentierten Ausschnittes des Objekts 104 oder des Bereichs 105 ergibt sich dann durch die relative Position zweier optischer Marker 112 im Abbild 114. Die Position des optischen Markers 112 kann in der auf diesem Marker basierten Identifikationskennung 108 insbesondere in codierter Form enthalten sein. Dies gilt auch für die Positionen mehrerer Marker 112.

Zur Ermittlung der digitalen Identifikationskennung 108 kann auch ein neuronales Netzwerk 150 eingesetzt werden, das ausgestaltet ist, das Fingerprinting durchzuführen. Das neuronale Netzwerk 150 kann als Software, als Hardware oder als eine Kombination von Hardware und Software ausgestaltet sein.

Die Funktion der Vorrichtung 100 ist wie folgt: In einem Schritt 160 kann die Mikroskopprobe zunächst vorbereitet werden. Dies erfolgt beispielsweise manuell, indem ein Gewebeschnitt hergestellt wird, oder Zellkulturen aufgezogen werden. Am Ende des Schrittes 160 ist der Bereich 105 zumindest teilweise mit dem Objekt 104 bedeckt.

In einem Schritt 162 kann dann das Objekt 104 weiter präpariert werden, beispielsweise durch Hinzufügen chemischer Substanzen. Im Schritt 162 kann das Objekt beispielsweise für bestimmte Untersuchungen präpariert werden. So können ein oder mehrere Fluorophore appliziert werden, wenn das Objekt 104 in Fluoreszenzlicht untersucht wird. Es können optische Marker, wie die Markerkörper 112 dem Objekt 104 hinzugefügt werden, um optische Marker 112 für das Fingerprinting 110 und/oder als Referenzpositionen für das Positionieren des Objekts zu erzeugen. Ferner können Kontrastmittel hinzugefügt werden. Der Schritt 162 kann mehrfach wiederholt werden und/oder zu einem späteren Zeitpunkt erstmalig stattfinden. So kann beispielsweise ein Fluorophor erst zu einem späteren Zeitpunkt hinzugefügt werden, wenn feststeht, dass das Objekt in Fluoreszenzlicht untersucht werden soll.

Falls Kryoproben untersucht werden, können in einem Schritt 164 beispielsweise mittels der Vorrichtung 136 zum Einfrieren, der Probenträger mit dem Objekt eingefroren werden. Dabei kann sich der Probenträger 106 im Kryobehälter 138 befinden oder nach dem Einfrieren in den Kryobehälter 138 eingelegt werden.

In einem Schritt 165 wird zunächst bevorzugt von einem Lichtmikroskop 130 ein eine Übersichtsaufnahme des Objekts 104 repräsentierendes Abbild 114 erzeugt. Zusätzlich können weitere Abbilder 114, beispielsweise einzelne sich überlappende oder voneinander beabstandete vergrößerte Ausschnitte des Objekts erzeugt werden. Zur Erzeugung des wenigstens einen Abbildes 114 ist das Lichtmikroskop mit wenigstens einer Kamera 166 versehen.

Anhand wenigstens eines Abbildes 114, bevorzugt anhand einer Mehrzahl von Abbildern 114, wird dann durch Fingerprinting 110 die digitale Identifikationskennung 108 des Objekts 104 bzw. des das Objekt 104 tragenden Probenträgers 106 berechnet. Die Berechnung findet in einem Datenverarbeitungssystem 168, beispielsweise einem PC, statt.

Im Schritt 170 findet das Berechnen der Identifikationskennung 108 statt.

Dabei kann, wie bereits erwähnt, eine Mehrzahl unterschiedlicher Abbilder 114 der Mikroskopproben erstellt werden, um von dieser Mehrzahl die Identifikationskennung 108 zu erzeugen. In der Identifikationskennung 108 können dabei die Identifikationskennungen 108a der unterschiedlichen Abbilder 114 beispielsweise in Form einer Blockchai n 171 enthalten sein. Die einzelnen Abbilder 114 können dabei eine unterschiedliche Vergrößerung und/oder Auflösung aufweisen. Die Abbilder 114 können in unterschiedlichen Farbkanälen und unterschiedlichen Farbräumen aufgenommen sein. Ferner können die Abbilder 114 unterschiedliche Bereiche des Bereichs 105 und/oder des Objekts 104 repräsentieren. Die Identifikationskennung 108 kann durch Anwendung einer Hash-Funktion auf ein Abbild, eine Teilmenge der Mehrzahl der Abbilder 114 oder aller Abbilder 114 berechnet werden.

Zur Berechnung der digitalen Identifikationskennung 108 kann auch ein Abbild 114 des Objekts 104 bzw. des Bereichs 105 in eine Mehrzahl von Kacheln 172 unterteilt werden. Diese Unterteilung kann im Zuge des Fingerprinting 110 durch das Datenverarbeitungssystem 168 erfolgen.

Nachdem im Schritt 170 die digitale Identifikationskennung 108 des Objekts 104 bzw. des Probenträgers 106 berechnet ist, kann der Probenträger 106 zunächst für eine spätere Untersuchung eingelagert werden, beispielsweise in einem Kühlschrank 140.

Während des Schrittes 170 kann zudem eine erste Überprüfung des Objekts 104 durchgeführt werden, beispielsweise dahingehend, ob es für die beabsichtigte Untersuchung geeignet ist, oder um Bereiche des Objekts festzulegen, die in nachfolgenden Schritten genauer untersucht werden müssen.

Ein Abbild 114, das einen solchen Bereich repräsentiert, kann dann ebenfalls durch Fingerprinting 110 eine separate digitale Identifikationskennung 108a erhalten, die mit der Identifikationskennung des die Übersichtsaufnahme repräsentierenden Abbildes 114 zu einer gemeinsamen Identifikationskennung zusammengefügt ist. Eine solche kombinierte Identifikationskennung 108 kann mit beliebig vielen Abbildern 114 erzeugt werden. Die gesamte Identifikationskennung 108 stellt dann die Identifikationskennung 108 für das komplette Objekt dar. Zur Identifikation des Objekts 104 reicht es dann aus, wenn sich die Identifikationskennung, die anhand eines später aufgenommenen Abbildes 114 des Objekts 104 aufgenommen wird, in der Identifikationskennung 108 des gesamten Objekts 104 wiederfindet.

Um dies zu ermöglichen, werden für die Berechnung der Identifikationskennung 108 lediglich solche optische Marker 112 verwendet, die auch in einem später erzeugten Abbild 114 des Objekts 104, das in Lage, Orientierung, Vergrößerung, Auflösung und/oder Modalität von dem wenigstens einem Abbild 114, anhand dem die Identifikationskennung 108 berechnet wurde, erhalten bleibt. Solche optischen Marker 112 sind die oben genannten Unregelmäßigkeiten 118. Jedes Abbild 114, das von dem Objekt 104 bzw. dem Bereich 105 neu erstellt ist, kann zur Berechnung einer neuen Identifikationskennung 108 dienen, die der bestehenden Identifikationskennung 108 hinzugefügt wird.

Sobald eine Identifikationskennung 108 des Objekts 104 bzw. der Mikroskopprobe berechnet ist, kann die Probe in einem Schritt 173 eingelagert werden.

Ist eine Identifikationskennung 108 anhand des wenigstens einen Abbildes 114 berechnet, so kann das Objekt 104 in einem Schritt 174 bearbeitet werden, beispielsweise durch eine Vorrichtung 134. Anschließend kann das Objekt 104 erneut durch ein Lichtmikroskop 130, oder aber durch eine andere Modalität, wie beispielsweise durch ein Elektronenmikroskop 132 untersucht werden. Die Untersuchung durch eine andere Modalität 132 oder eine andere Art von Lichtmikroskop 130 kann auch unmittelbar nach dem Schritt 166, ohne eine dazwischen erfolgte Bearbeitung 174 des Objekts 104 erfolgen. In einem solchen Fall kann die Bearbeitung 174 auch erst nach dem Schritt 176 erfolgen.

Anhand der Identifikationskennung 108 lässt sich das Objekt 104 auch in einem Abbild 114, das in einer anderen Modalität, beispielsweise durch das Elektronenmikroskop 132 erzeugt wurde, identifizieren. Dabei kann anhand eines jeden Abbildes 114 eine Identifikationskennung 108 oder 108a berechnet werden, die der bereits vorhandenen Identifikationskennung 108 automatisch hinzugefügt wird oder die bereits vorhandene Identifikationskennung 108 oder Teile 108a hiervon ersetzt.

Wird beispielsweise ein Bereich 126a des Objekts 104 bearbeitet, durch Ausstanzen, Abtragen oder Erzeugen einer Lamelle, so ist eine Identifikationskennung 108 eines Abbildes 114, das den bearbeiteten Bereich 126a enthält, nicht mehr aktuell. Ist der bearbeitete Bereich 126a klein, so ist der Beitrag des bearbeiteten Bereichs zur Identifikationskennung 108, die anhand einer Übersichtsaufnahme oder eines einen größeren Bereich repräsentierenden Abbildes 114 erzeugt wurde, unter Umständen nicht groß genug, um die Identifikationskennung 108 des gesamten Objekts 104 zu ändern. Ist der bearbeitete Bereich 126a in einem Abbild 114 jedoch nicht mehr klein, so kann die Identifikationskennung 108, 108a dieses Abbildes aktualisiert oder durch eine neue Identifikationskennung 108, 108a in der der bearbeitete Bereich 126a berücksichtigt ist, ersetzt werden. Dabei kann der bearbeitete Bereich 126a selbst als optischer Marker 112 dienen.

Die Identifikationskennung 108, 108a kann, sofern sie schnell berechnet wird, auch zur Korrelation und zum automatischen Registrieren von Abbildern 114 dienen. Anstelle der Berechnung einer Korrelationsfunktion können beispielsweise in einer Übersichtsaufnahme für laufend veränderte Abschnitte Identifikationskennungen 108, 108a berechnet und mit einer zuvor berechneten Identifikationskennung 108, 108a eines als interessant bestimmten Bereichs verglichen werden. Stimmt die aktuell berechnete Identifikationskennung 108, 108a mit der zuvor berechneten Identifikationskennung 108, 108a überein oder ergeben sich nur geringe Abweichungen, so stimmen die Abschnitte überein. Die Registrierung kann erleichtert sein, wenn die Positionen der optischen Marker in der auf diesen Markern 112 basierenden Identifikationskennungen 108, 108a enthalten sind.

Nach der Berechnung einer ersten Identifikationskennung 108 eines Objekts 104 können die Schritte 166, 173, 174, 176 in beliebiger Reihenfolge, in beliebigen Zeitabständen auch mehrfach hintereinander mit demselben Objekt 104 durchgeführt werden.

Die Identifikationskennung 108 erlaubt es dabei, das Objekt 104 durch Erstellen des Abbildes 114, das gleichzeitig zur Untersuchung des Objekts 104 dient, zu identifizieren. Gleichzeitig kann die Identifikationskennung 108 zur Identifikation von Teilbereichen des Objekts 104 oder des Bereichs 105 verwendet werden. Derartige Teilbereiche können beispielsweise zur Bearbeitung 174 oder zur Untersuchung mit einer anderen Art von Lichtmikroskop 130 oder Elektronenmikroskop 132 vorbestimmt sein.

Um die Rechenleistung bei der Berechnung der Identifikationskennung 108 gering zu halten, wird das Abbild 114 bevorzugt vor der Berechnung der Identifikationskennung 108 optisch oder elektronisch gefiltert. Der dabei angewendete Filter 178 unterdrückt dabei Anteile im Abbild 114, die keinen optischen Marker 112 repräsentieren. So können beispielsweise Markerkörper 120 verwendet werden, die nur ein enges Reflexions- und/oder Fluoreszenzspektrum aufweisen. Der Filter 178 kann in einem solchen Fall als Bandpassfilter ausgestaltet sein, dessen Passband auf einen Teil dieses Reflexions- und/oder Fluoreszenzspektrums beschränkt ist. Ferner kann der Filter 178 eine Mustererkennung beinhalten, die bestimmte Muster im Abbild 114, die als optische Marker dienen, beispielsweise Ziffern, Buchstaben und/oder bestimmte geometrische Figuren, verstärkt und davon abweichende Marker unterdrückt. Der Filter 178 kann dabei an die unterschiedlichen Modalitäten angepasst sein. Werden beispielsweise fluoreszierende Perlenkörper 142 verwendet, so kann bei einer optischen Untersuchung ein Passbandfilter zum Herausfiltern des Fluoreszenzspektrums des Markerkörper 120 verwendet werden, während in einem von einem Elektronenmikroskop 132 erzeugten Abbild ein mustersensitiver Filter eingesetzt wird, in dem die Geometrie der Markerkörper 120 berücksichtigt ist.

Einige Ausführungsbeispiele beziehen sich auf ein Mikroskop 130, 132, das ein System umfasst, wie in Verbindung mit der Fig. 1 beschrieben. Alternativ kann ein Mikroskop Teil eines Systems, wie in Verbindung mit der Fig. 1 beschrieben, sein oder mit demselben verbunden sein. Fig. 1 zeigt eine schematische Darstellung eines Systems 100, das ausgebildet ist zum Ausführen eines hierin beschriebenen Verfahrens. Das System 100 umfasst ein Mikroskop 130, 132 und ein Computersystem 160. Das Mikroskop 130, 132 ist ausgebildet zum Aufnehmen von Bildern und ist mit dem Computersystem 160 verbunden. Das Computersystem 160 ist ausgebildet zum Ausführen von zumindest einem Teil eines hierin beschriebenen Verfahrens. Das Computersystem 160 kann ausgebildet sein zum Ausführen eines Maschinenlern-Algorithmus. Das Computersystem 160 und das Mikroskop 130, 132 können getrennte Einheiten sein, können aber auch zusammen in einem gemeinsamen Gehäuse integriert sein. Das Computersystem 160 könnte Teil eines zentralen Verarbeitungssystems des Mikroskops 130, 132 sein und/oder das Computersystem 160 könnte Teil einer Teilkomponente des Mikroskops 130, 132 sein, wie eines Sensors, eines Aktuators, einer Kamera oder einer Beleuchtungseinheit, usw. des Mikroskops 130, 132.

Das Computersystem 160 kann eine lokale Computervorrichtung (z. B. Personalcomputer, Laptop, Tablet-Computer oder Mobiltelefon) mit einem oder mehreren Prozessoren und einer oder mehreren Speichervorrichtungen oder kann ein verteiltes Computersystem (z. B. ein Cloud-Computing-System mit einem oder mehreren Prozessoren oder einer oder mehreren Speichervorrichtungen, die an verschiedenen Stellen verteilt sind, zum Beispiel an einem lokalen Client und/oder einer oder mehreren Remote-Server-Farmen und/oder Datenzentren) sein. Das Computersystem 160 kann irgendeine Schaltung oder Kombination von Schaltungen umfassen. Bei einem Ausführungsbeispiel kann das Computersystem 160 einen oder mehrere Prozessoren umfassen, die von irgendeinem Typ sein können. Nach hiesigem Gebrauch kann Prozessor irgendein Typ von Rechenschaltung bedeuten, wie beispielsweise, aber nicht beschränkt auf, ein Mikroprozessor, ein Mikrocontroller, ein Mikroprozessor mit komplexem Befehlssatz (CISC), ein Mikroprozessor mit reduziertem Befehlssatz (RISC), ein Sehr-langes-Anweisungswort- (Very Long Instruction Word; VLIW) Mikroprozessor, ein Graphikprozessor, ein digitaler Signalprozessor (DSP), ein Multi-Core-Prozessor, ein feld-programmierbares Gate-Array (FPGA), z.B. eines Mikroskops oder einer Mikroskopkomponente (z. B. Kamera oder Sensor) oder irgendein anderer Typ von Prozessor oder Verarbeitungsschaltung. Andere Typen von Schaltungen, die in dem Computersystem 160 umfasst sein können, können eine speziell angefertigte Schaltung, eine anwendungsspezifische integrierte Schaltung (ASIC) oder Ähnliches, wie beispielsweise eine oder mehrere Schaltungen (z. B. eine Kommunikationsschaltung) zur Verwendung bei drahtlosen Vorrichtungen wie z. B. Mobiltelefonen, Tablet-Computern, Laptop-Computern, Funksprechgeräten und ähnlichen elektronischen Systemen sein. Das Computersystem 160 kann eine oder mehrere Speichervorrichtungen umfassen, die ein oder mehrere Speicherelemente umfassen können, die für die jeweilige Anwendung geeignet sind, wie beispielsweise einen Hauptspeicher in der Form eines Nurlesespeichers (ROM), eine oder mehrere Festplatten und/oder ein oder mehrere Laufwerke, die entfernbare Medien, wie beispielsweise CDs, Flash-Speicherkarten, DVD und Ähnliches handhaben. Das Computersystem 160 kann auch eine Anzeigevorrichtung, einen oder mehrere Lautsprecher, und eine Tastatur und/oder Steuerung umfassen, die eine Maus, Trackball, Touchscreen, Stimmerkennungsvorrichtung oder irgendeine andere Vorrichtung umfassen kann, die es einem Systemnutzer erlaubt, Information in das Computersystem 160 einzugeben und Information von demselben zu empfangen.

Einige oder alle Verfahrensschritte können durch (oder unter Verwendung) einer Hardwarevorrichtung ausgeführt werden, wie es zum Beispiel ein Prozessor, ein Mikroprozessor, ein programmierbarer Computer oder eine elektronische Schaltung sein kann. In einigen Ausführungsbeispielen können ein oder mehrere der wichtigsten Verfahrensschritte durch eine solche Vorrichtung ausgeführt werden.

Abhängig von bestimmten Implementierungsanforderungen können Ausführungsbeispiele der Erfindung in Hardware oder Software implementiert werden. Die Implementierung kann mit einem nichtflüchtigen Speichermedium wie einem digitalen Speichermedium, wie beispielsweise einer Diskette, einer DVD, einem Blu-Ray, einer CD, einem ROM, einem PROM und EPROM, einem EEPROM oder einem FLASH-Speicher, durchgeführt werden, auf dem elektronisch lesbare Steuersignale gespeichert sind, die mit einem programmierbaren Computersystem so zusammenwirken (oder zusammenwirken können), dass das jeweilige Verfahren durchgeführt wird. Daher kann das digitale Speichermedium computerlesbar sein.

Einige Ausführungsbeispiele gemäß der Erfindung umfassen einen Datenträger mit elektronisch lesbaren Steuersignalen, die mit einem programmierbaren Computersystem zusammenwirken können, so dass eines der hierin beschriebenen Verfahren durchgeführt wird.

Im Allgemeinen können Ausführungsbeispiele der vorliegenden Erfindung als Computerprogrammprodukt mit einem Programmcode implementiert werden, wobei der Programmcode für die Ausführung eines der Verfahren wirksam ist, wenn das Computerprogrammprodukt auf einem Computer läuft. Der Programmcode kann beispielsweise auf einem maschinenlesbaren Träger gespeichert werden.

Weitere Ausführungsbeispiele umfassen das Computerprogramm zur Durchführung eines der hierin beschriebenen Verfahren, das auf einem maschinenlesbaren Träger gespeichert ist.

Mit anderen Worten, ein Ausführungsbeispiel der vorliegenden Erfindung ist daher ein Computerprogramm mit einem Programmcode zur Durchführung eines der hierin beschriebenen Verfahren, wenn das Computerprogramm auf einem Computer läuft.

Ein weiteres Ausführungsbeispiel der vorliegenden Erfindung ist daher ein Speichermedium (oder ein Datenträger oder ein computerlesbares Medium), das ein darauf gespeichertes Computerprogramm zum Ausführen eines der hierin beschriebenen Verfahren umfasst, wenn es von einem Prozessor ausgeführt wird. Der Datenträger, das digitale Speichermedium oder das aufgezeichnete Medium sind in der Regel greifbar und/oder nicht übergangslos. Eine weiteres Ausführungsbeispiel der vorliegenden Erfindung ist eine Vorrichtung, wie hierin beschrieben, die einen Prozessor und das Speichermedium umfasst.

Ein weiteres Ausführungsbeispiel der Erfindung ist daher ein Datenstrom oder eine Signalfolge, die das Computerprogramm zur Durchführung eines der hierin beschriebenen Verfahren darstellt. Der Datenstrom oder die Signalfolge kann beispielsweise so konfiguriert werden, dass sie über eine Datenkommunikationsverbindung, beispielsweise über das Internet, übertragen werden.

Ein weiteres Ausführungsbeispiel umfasst ein Verarbeitungsmittel, zum Beispiel einen Computer oder eine programmierbare Logikvorrichtung, das konfiguriert oder angepasst ist, um eines der hierin beschriebenen Verfahren auszuführen.

Ein weiteres Ausführungsbeispiel umfasst einen Computer, auf dem das Computerprogramm zum Ausführen eines der hierin beschriebenen Verfahren installiert ist.

Ein weiteres Ausführungsbeispiel gemäß der Erfindung umfasst eine Vorrichtung oder ein System, das konfiguriert ist, um (zum Beispiel elektronisch oder optisch) ein Computerprogramm zum Ausführen eines der hierin beschriebenen Verfahren an einen Empfänger zu übertragen. Der Empfänger kann beispielsweise ein Computer, eine mobile Vorrichtung, eine Speichervorrichtung oder dergleichen sein. Die Vorrichtung oder das System kann beispielsweise einen Dateiserver zum Übertragen des Computerprogramms an den Empfänger umfassen.

In einigen Ausführungsbeispielen kann eine programmierbare logische Vorrichtung (z.B. eine feldprogrammierbare Gatteranordnung, FPGA) verwendet werden, um einige oder alle Funktionalitäten der hierin beschriebenen Verfahren auszuführen. In einigen Ausführungsbeispielen kann eine feldprogrammierbare Gatteranordnung mit einem Mikroprozessor zusammenarbeiten, um eines der hierin beschriebenen Verfahren durchzuführen. Im Allgemeinen werden die Verfahren vorzugsweise von jedem Hardwaregerät durchgeführt.

### Bezugszeichen

- 100: Vorrichtung
- 102: Mikroskopprobe
- 104: Objekt
- 104a: Bearbeitetes Objekt
- 105: zur Aufnahme des Objekts ausgestalteter oder das Objekt aufnehmender Bereich des Probenträgers
- 106: Probenträger
- 108: Identifikationskennung
- 108a: Teil der Identifikationskennung
- 110: Fingerprinting
- 112: Optischer Marker
- 114: Abbild
- 116: Muster
- 118: Unregelmäßigkeit
- 120: Markerkörper
- 122: Beschichtung
- 124: Vereisungsstruktur
- 126: Struktur des Objekts
- 126a: bearbeiteter Bereich des Objekts
- 130: Lichtmikroskop
- 132: Elektronenmikroskop
- 134: Vorrichtung zum Bearbeiten des Objekts
- 136: Vorrichtung zum Einfrieren des Objekts
- 138: Kryobehälter
- 140: Kühlschrank
- 142: Positionsreferenz
- 150: Neuronales Netzwerk
- 160: Vorbereiten der Probe
- 162: Präparieren der Probe
- 164: Einfrieren der Probe
- 165: Erzeugen eines Abbildes
- 166: Kamera
- 168: Datenverarbeitungssystem
- 170: Berechnen der Identifikationskennung
- 171: Blockchain
- 172: Kachel
- 173: Lagern der Probe
- 174: Bearbeiten des Objekts
- 176: Untersuchen des Objekts mittels eines Elektronenmikroskops
- 178: Filter

Darüber hinaus umfasst die Anmeldung die folgenden Aspekte:
1. Vorrichtung (100) zur Untersuchung von Mikroskopproben (102), wobei die Mikroskopproben (102) ein zu mikroskopierendes Objekt (104) und einen das Objekt (104) haltenden Probenträger (106) aufweisen, und wobei die Vorrichtung (100) ausgestaltet ist, eine digitale Identifikationskennung (108) der Mikroskopprobe (102) durch Fingerprinting (110) der Mikroskopprobe (102) unter Verwendung wenigstens eines optischen Markers (112) in wenigstens einem digitalen Abbild (114) zumindest eines Teils des Objekts (104) zu berechnen.
2. Vorrichtung (100) nach Aspekt 1, wobei der Probenträger (106) mit einem vorbestimmten Muster (116) versehen ist und der wenigstens eine optische Marker (112) wenigstens eine Unregelmäßigkeit (118) des Musters (112) im Abbild (114) umfasst.
3. Vorrichtung (100) nach einem Aspekt 2, wobei das Muster (112) einen quasi-zufälligen Code repräsentiert, der eine Lage kodiert.
4. Vorrichtung (100) nach einem der Aspekte 1 bis 3, wobei die Mikroskopprobe (102) mit zufällig verteilten Markerkörpern (120) versehen ist und der wenigstens eine optische Marker (112) wenigstens einen Markerkörper im Abbild (114) umfasst.
5. Vorrichtung (100) nach einem der Aspekte 1 bis 4, wobei der wenigstens eine optische Marker (112) eine Unregelmäßigkeit (118) einer Beschichtung (122) des Probenträgers (106) im Abbild (114) umfasst.
6. Vorrichtung (100) nach einem der Aspekte 1 bis 5, wobei der wenigstens eine optische Marker (112) eine Struktur (126) des Objekts (104) im Abbild (112) ist.
7. Vorrichtung (100) nach einem der Aspekte 1 bis 6, wobei die Vorrichtung (100) wenigstens eine Einrichtung aus der folgenden Liste aufweist:
   - ein Lichtmikroskop (130);
   - ein Elektronenmikroskop (132);
   - eine Vorrichtung (134) zum Bearbeiten des Objekts (104);
   - eine Vorrichtung (136) zum Einfrieren der Mikroskopprobe (102);
   - einen Kryobehälter (138) für wenigstens eine Mikroskopprobe (102).
8. Vorrichtung (100) nach einem der Aspekte 1 bis 7, wobei die Vorrichtung (100) ausgestaltet ist,
   - eine Mehrzahl unterschiedlicher Abbilder (114) der Mikroskopprobe (102) und eine Identifikationskennung (108) für jedes der unterschiedlichen Abbilder (114) separat, für eine Untermenge der unterschiedlichen Abbilder (114) und/oder für die Gesamtheit der Abbilder (114) gemeinsam durch Fingerprinting (110) zu erstellen,
   - und die Mehrzahl der Abbilder (114) durch verschiedene Einrichtungen zu erzeugen, wobei die verschiedenen Einrichtungen ein oder mehrere Lichtmikroskope (130) und/oder ein oder mehrere Elektronenmikroskope (132) umfassen.
9. Vorrichtung (100) nach Aspekt 8, wobei die Vorrichtung ausgestaltet ist, die Identifikationskennungen (108) der unterschiedlichen Abbilder zu einer übergeordneten Identifikationskennung (108) des Objekts (104) zusammenzufügen.
10. Vorrichtung (100) nach einem der Aspekte 1 bis 9, wobei die Vorrichtung (100) ausgestaltet ist, das Objekt (104) durch Vergleich der berechneten digitalen Identifikationskennung (108) mit einer zuvor berechneten Identifikationskennung (108) eines weiteren Abbildes (114) zu identifizieren, das ein unterschiedliches Kontrast- und/oder Aufnahmeverfahren, unterschiedliche Farbräume oder -kanäle, eine unterschiedliche Modalität, Auflösung, Lage, Orientierung und/oder Vergrößerung aufweist als das wenigstens eine Abbild (114) zur Ermittlung der berechneten Identifikationskennung (108).
11. Vorrichtung (100) nach einem der Aspekte 1 bis 10, wobei die Vorrichtung (100) ausgestaltet ist, das Abbild (114) in eine Mehrzahl von Kacheln (172) zu zerlegen und eine Identifikationskennung (108) für jede einzelne Kachel (172) separat und/oder Kombinationen von Kacheln (172) jeweils zusammen zu berechnen.
12. Vorrichtung (100) nach Aspekt 11, wobei die Vorrichtung (100) ausgestaltet ist, die einzelnen Identifikationskennungen (108) der Kacheln (172) zu einer gemeinsamen Identifikationskennung (108) zu kombinieren.
13. Vorrichtung (100) nach einem der Aspekte 1 bis 12, wobei in der Identifikationskennung (108) ein Zeitpunkt der Erstellung des wenigstens einen Abbildes (114) enthalten ist.
14. Vorrichtung (100) nach einem der Aspekte 1 bis 13, wobei die Vorrichtung (100) ausgestaltet ist, bei der Berechnung der digitalen Identifikationskennung (108) Metadaten, die nicht im Abbild (114) enthalten sind, zu berücksichtigen.
15. Vorrichtung (100) nach einem der Aspekte 1 bis 14, wobei die Identifikationskennung (108) des Objekts (104) eine Mehrzahl von Identifikationskennungen (108) unterschiedlicher Abbilder (114) des Objekts (104) in Form einer Blockchain (171) enthält.
16. Mikroskopierverfahren für Mikroskopproben (102), wobei die Mikroskopproben (102) ein zu mikroskopierendes Objekt (104) und einen das Objekt haltenden Probenträger (106) aufweisen, umfassend den Verfahrensschritt: Berechnen einer digitalen Identifikationskennung (108) für wenigstens eine der Mikroskopproben (102) durch Fingerprinting (110) der Mikroskopproben (102) unter Verwendung optischer Marker (112) in wenigstens einem digitalen Abbild (114) zumindest eines Teils des Objekts.
17. Mikroskopierverfahren nach Aspekt 16, umfassend folgenden Verfahrensschritt: Erstellen einer Mehrzahl unterschiedlicher Abbilder (114) der Mikroskopprobe (102).
18. Mikroskopierverfahren nach einem der Aspekte 16 oder 17, wobei die Identifikationskennung (108) Identifikationskennungen (108a) einer Mehrzahl unterschiedlicher Abbilder (114) des Objekts (104) enthält.
19. Mikroskopierverfahren nach einem der Aspekte 16 bis 18, wobei die digitale Identifikationskennung (108) mittels maschinellen Lernens berechnet wird.
20. Mikroskopierverfahren nach Aspekt 19, wobei die digitale Identifikationskennung (108) mittels eines neuronalen Netzwerkes (150) berechnet wird und wobei das neuronale Netzwerk (150) unter Verwendung einer Mehrzahl unterschiedlicher Abbilder (114) trainiert wird.
21. Mikroskopierverfahren nach einem der Aspekte 16 bis 20, umfassend die folgenden Verfahrensschritte:
   - Bearbeiten des Objekts (104),
   - Erstellen wenigstens eines Abbildes (114) des bearbeiteten Objekts (104a),
   - Erstellen einer digitalen Identifikationskennung (108) der Mikroskopprobe (102) und/oder
   - Ergänzen einer vorhandenen digitalen Identifikationskennung (108) der Mikroskopprobe (112) durch Fingerprinting (110) des wenigstens einen Abbildes des bearbeiten Objekts (104a) unter Verwendung optischer Marker (112) im wenigstens einen Abbild
      und/oder
   - Ersetzen einer vorhandenen digitalen Identifikationskennung der Mikroskopprobe (102) durch Fingerprinting (110) des wenigstens einen Abbildes des bearbeiten Objekts (104a) unter Verwendung optischer Marker (112) zur Erstellung einer digitalen Identifikationskennung (108).
22. Mikroskopierverfahren nach einem der Aspekte 16 bis 21, umfassend folgenden Verfahrensschritt:
   Verwenden wenigstens eines optischen Markers (112) zur Berechnung einer digitalen Identifikationskennung (110) als Positionsreferenz (142).
23. Vorrichtung (100) zur Durchführung des Mikroskopierverfahrens nach einem der Aspekte 16 bis 22.
24. Computerprogrammprodukt, umfassend Befehle, die bei der Ausführung des Programms durch einen Computer diesen veranlassen, das Verfahren nach einem der Aspekte 16 bis 22 auszuführen.
25. Computerlesbarer Datenträger, auf dem das Computerprogrammprodukt nach Aspekt 24 gespeichert ist.
26. Neuronales Netzwerk (150) zur Verwendung mit wenigstens einem Mikroskop und zur Berechnung einer digitalen Identifikationskennung, wobei das neuronale Netzwerk durch digitale Identifikationskennungen trainiert ist, die durch das Verfahren nach einem der Aspekte 16 bis 22 berechnet sind.
27. Digitale Identifikationskennung (108) eines Abbildes (114) einer Mikroskopprobe (102), berechnet durch eine Vorrichtung (100) nach einem der Ansprüche 1 bis 15 und/oder einem Verfahren nach einem der Aspekte 16 bis 22 und/oder unter Verwendung eines neuronalen Netzwerks (150) nach Aspekt 26.

## Patentansprüche

1. Vorrichtung (100) zur Untersuchung von Mikroskopproben (102), wobei die Mikroskopproben (102) ein zu mikroskopierendes Objekt (104) und einen das Objekt (104) haltenden Probenträger (106) aufweisen, und wobei die Vorrichtung (100) ausgestaltet ist, über die Lage zweier optischer Marker oder die Größe und Orientierung eines unregelmäßig geformten optischen Markers in wenigstens einem digitalen Abbild (114) zumindest eines Teils des Objekts (104) die Auflösung, Orientierung, Vergrößerung und/oder Lage des Abbildes (114) zu bestimmen, wobei
A) das Objekt (104) mit zufällig verteilten Markerkörpern versehen ist, und wobei die zwei optischen Marker oder der unregelmäßig geformte optische Marker Markerkörper sind;
oder
B) das Objekt (104) eine Unregelmäßigkeit aufweist, wobei die Unregelmäßigkeit eine Kontamination des Objekts (104) und/oder eines Bereichs des Objekts (104) ist oder, wenn das Objekt (104) tiefgefroren ist, die Unregelmäßigkeit ein Abbild einer Vereisungsstruktur (124) umfasst, und wobei die Unregelmäßigkeit als die zwei optischen Marker oder als der unregelmäßig geformte optische Marker dient;
oder
C) das Objekt (104) einen bearbeiteten Bereich aufweist, wobei der bearbeitete Bereich eine Lamelle, ein Lift-out oder ein ausgeschnittener oder abgetragener Bereich des Objekts (104) ist, und wobei der bearbeitete Bereich als die zwei optischen Marker oder als der unregelmäßig geformte optische Marker dient;
oder
D) das Objekt (104) eine Struktur aufweist, wobei die Struktur ein Zellbestandteil, eine Anordnung mehrerer Zellbestandteile, eine Verteilung mehrerer Zellen, eine einzelne Zelle, eine Gewebestruktur, eine Zellstruktur und/oder eine beliebige Kombination dieser Strukturen ist, und wobei die Struktur als die zwei optischen Marker oder als der unregelmäßig geformte optische Marker dient.

2. Vorrichtung (100) nach Anspruch 1, wobei die Unregelmäßigkeit absichtlich erzeugt ist.

3. Vorrichtung (100) nach Anspruch 1 oder 2, wobei die Kontamination ein Eiskristall oder eine vereiste Stelle bei einem Kryosample ist.

4. Vorrichtung (100) nach einem der Ansprüche 1 bis 3, wobei die Unregelmäßigkeit eine Beschichtung des Probenträgers (106) im Abbild (114) umfassen, wobei die Beschichtung eine Nährschicht, ein Carbon-Layer, eine durch einen Laser schneidbare Membran und/oder eine Carbon-Membran umfasst.

5. Vorrichtung (100) nach einem der Ansprüche 1 bis 4, wobei die zwei optischen Marker oder der unregelmäßig geformte optische Marker als Positionsreferenz dienen/dient.

6. Vorrichtung (100) nach Anspruch 5, wobei der Positionsreferenz eine eindeutige Lagekennung auf dem Probenträger in Form von Koordinaten zugeordnet ist.

7. Vorrichtung (100) nach einem der Ansprüche 1 bis 6, wobei das Objekt (104) ein biologisches Objekt ist.

8. Vorrichtung (100) nach einem der Ansprüche 1 bis 7, wobei jedem optischen Marker (112) eine absolute Position innerhalb eines Bereichs (105) zugeordnet ist, wobei die Mikroskopprobe (102) den Bereich (105) als einen mit dem Objekt (104) bedeckten oder zur Aufnahme des Objekts (104) ausgestalteten Bereich aufweist.

9. Vorrichtung (100) nach einem der Ansprüche 1 bis 8, wobei die Vorrichtung (100) ausgestaltet ist, eine digitale Identifikationskennung (108) der Mikroskopprobe (102) durch Fingerprinting (110) der Mikroskopprobe (102) unter Verwendung wenigstens der zwei optischen Marker und/oder des unregelmäßig geformten optischen Markers zu berechnen.

10. Mikroskopierverfahren für Mikroskopproben (102), wobei die Mikroskopproben (102) ein zu mikroskopierendes Objekt (104) und einen das Objekt haltenden Probenträger (106) aufweisen und wobei das Objekt (104) mindestens zwei optische Marker oder einen unregelmäßig geformten optischen Marker in wenigstens einem digitalen Abbild (114) zumindest eines Teils des Objekts (104) aufweist, wobei das Mikroskopierverfahren umfasst:
A.1) - Zuordnen einer absoluten Position zu jedem der mindestens zwei optischen Marker im Abbild (114); und
A.2) - Bestimmen der Auflösung, Orientierung, Vergrößerung und/oder Lage des Abbildes (114) über die relative Position der mindestens zwei optischen Marker,
oder
B.1) - Zuordnen einer absoluten Position zu dem unregelmäßig geformten optischen Marker;
B.2) - Bestimmen einer Größe und Orientierung des unregelmäßig geformten optischen Markers; und
B.3) - Bestimmen der Auflösung, Orientierung, Vergrößerung und/oder Lage des Abbildes (114) über die Größe und Orientierung des unregelmäßig geformten optischen Markers.

11. Mikroskopierverfahren nach Anspruch 10, wobei das Mikroskopierverfahren ferner umfasst:
Identifizieren der mindestens zwei optischen Marker oder des einen unregelmäßig geformten optischen Markers aus einer der folgenden Alternativen:
A) aus zufällig verteilten Markerkörpern, mit denen das Objekt (104) versehen ist;
oder
B) aus einer Unregelmäßigkeit, die das Objekt (104) aufweist, wobei die Unregelmäßigkeit eine Kontamination des Objekts (104) und/oder eines Bereichs des Objekts (104) ist oder, wenn das Objekt (104) tiefgefroren ist, die Unregelmäßigkeit ein Abbild einer Vereisungsstruktur (124) umfasst;
oder
C) aus einem bearbeiteten Bereich, den das Objekt (104) aufweist, wobei der bearbeitete Bereich eine Lamelle, ein Lift-out oder ein ausgeschnittener oder abgetragener Bereich des Objekts (104) ist;
oder
D) aus einer Struktur, die das Objekt (104) aufweist, wobei die Struktur ein Zellbestandteil, eine Anordnung mehrerer Zellbestandteile, eine Verteilung mehrerer Zellen, eine einzelne Zelle, eine Gewebestruktur, eine Zellstruktur und/oder eine beliebige Kombination dieser Strukturen ist.

12. Mikroskopierverfahren nach Anspruch 10 oder 11, ferner mit:
- Berechnen einer digitalen Identifikationskennung (108) für wenigstens eine der Mikroskopproben (102) durch Fingerprinting (110) der Mikroskopproben (102) unter Verwendung der mindestens zwei optischen Marker oder des einen unregelmäßig geformten optischen Markers.

13. Mikroskopierverfahren nach Anspruch 12, wobei die digitale Identifikationskennung (108) mittels maschinellen Lernens berechnet wird.

14. Mikroskopierverfahren nach Anspruch 13, wobei die digitale Identifikationskennung (108) mittels eines neuronalen Netzwerkes (150) berechnet wird und wobei das neuronale Netzwerk (150) unter Verwendung einer Mehrzahl unterschiedlicher Abbilder (114) trainiert wird.

15. Computerprogrammprodukt, umfassend Befehle, die bei der Ausführung des Programms durch einen Computer diesen veranlassen, das Verfahren nach einem der Ansprüche 10 bis 14 auszuführen.
